## Europäisches Patentamt
## European Patent Office
## Office européen des brevets

(19)

(11) Numéro de publication: **0 176 380**
**B1**

(12) # FASCICULE DE BREVET EUROPÉEN

(45) Date de publication du fascicule du brevet:
**25.01.89**

(51) Int. Cl.⁴: **C 02 F 1/52**, B 01 D 21/00

(21) Numéro de dépôt: **85401570.8**

(22) Date de dépôt: **31.07.85**

(54) **Dispositif de clarification à lit de boue pour liquide chargé de matières solides.**

(30) Priorité: **31.07.84 FR 8412141**

(43) Date de publication de la demande:
**02.04.86 Bulletin 86/14**

(45) Mention de la délivrance du brevet:
**25.01.89 Bulletin 89/4**

(84) Etats contractants désignés:
**BE DE FR GB IT NL**

(56) Documents cité:
**CH-A-557 303**
**DE-A-2 238 959**
**US-A-2 382 490**
**US-A-3 517 814**

(73) Titulaire: **ALSTHOM, 38, avenue Kléber, F-75784 Paris Cédex 16 (FR)**

(72) Inventeur: **Condolios, Elie, 6, rue Aristide Bergès, F-38000 Grenoble (FR)**

(74) Mandataire: **Weinmiller, Jürgen, Lennéstrasse 9 Postfach 24, D-8133 Feldafing (DE)**

EP 0 176 380 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne la clarification de liquides chargés de matières fines en suspension.

Les liquides à clarifier à l'aide du dispositif de l'invention sont généralement des eaux qui apparaissent en sortie d'un processus industriel et sont par exemple destinées à un second usage industriel ou à un rejet dans un réseau collecteur public ou dans le sol. Bien que la description ci-après se réfère à des exemples pratiques de mise en oeuvre de ce dispositif dans le cas d'eaux résiduelles d'industries minérales, il est bien entendu que ce dernier peut être appliqué à la clarification de liquides chargés très divers.

Les procédés utilisés jusqu'à présent nécessitent un temps relativement long pour assurer la séparation et la décantation des matières solides en suspension de manière à obtenir un liquide ou une eau suffisamment clarifiée pour répondre aux normes imposées. Ceci résulte du fait que la vitesse ascensionnelle de séparation ne dépasse pas quelques mètres par heure, et oblige à utiliser un équipement de séparation coûteux et de dimensions et volume importants.

Il est connu que pour accélérer la décantation des particules solides il est nécessaire d'établir des liaisons entre les particules en suspension. Dans le liquide chargé on ajoute pour cela une faible quantité d'un adjuvant approprié qui permet de déclencher le phénomène de floculation. Ce dernier forme des agglomérats ou flocons de dimensions nettement plus importantes que les particules qui les composent.

Généralement, après floculation, le liquide chargé de flocons de tailles différentes est introduit à un niveau intermédiaire du compartiment unique d'un dispositif de clarification et de décantation d'un type dit à un seul étage. Ce compartiment contient une concentration plus importante de flocons. Ceci permet d'accélérer le grossissement des flocons et par voie de conséquence leur vitesse de sédimentation. Les flocons décantés dans la partie basse de la zone de décantation de ce compartiment se concentrent et sont extraits, de façon généralement continue mais parfois discontinue, sous la forme de boue plus ou moins concentrée, avec un débit moyen convenablement déterminé. Le liquide clarifié est enlevé dans la partie haute du compartiment par simple débordement.

Il est également connu que, pour obtenir un effet plus rapide, on peut séparer les deux fonctions de clarification des liquides et de concentration des solides, c'est-à-dire les réaliser dans deux compartiments distincts de l'appareil. On dit alors que le dispositif est à deux étages. Les étages peuvent être superposés, l'étage de clarification étant au dessus de l'étage de concentration, ou concentriques, ou côte à côte.

Il est connu que le phénomène de floculation déclenché par des adjuvants de floculation forme des agglomérats dont la cohésion mécanique est faible, et que les mouvements hydrauliques dans la zone de clarification peuvent avoir à la fois des effets bénéfiques et des effets néfastes quant à la structure et aux caractéristiques physiques des agglomérats.

Des vitesses trop rapides dans certaines parties de l'appareil brisent des flocons antérieurement formés: Les flocons finalement formés présentent un spectre granulométrique trop étendu avec beaucoup d'agglomérats très fins se décantant mal. Des vitesses trop lentes dans l'autres parties permettent la formation de flocons trop gros qui s'agglomèrent entre eux. Ils forment alors des couches continues peu perméables qui gènent le passage du liquide à clarifier. Des phénomènes d'instabilité apparaissent alors avec formation le zones où ce liquide prend des vitesses rapides qui détruisent les flocons.

Plus particulièrement un premier procédé de clarification connu applicable à un liquide chargé de particules fines comporte les opérations suivantes:

- adjonction d'un adjuvant de floculation au liquide chargé pour que lesdites particules fines qui se rencontrent se lient en formant des flocons,
- introduction sensiblement continue de ce mélange dans une chambre de distribution à pression sensiblement uniforme amenant ce mélange dans une chambre de clarification a travers une pluralité d'injecteurs répartis sur la surface de cette chambre au bas de celle-ci,
- évacuation du liquide clarifié par un orifice d'évacuation de liquide en partie supérieure de cette chambre,
- et évacuation de boue à travers un orifice d'évacuation de boue situé plus bas.

Le débit de liquide chargé injecté est choisi de manière à former au dessus de ces injecteurs un lit de boue au sein duquel le liquide chargé monte entre des flocons déjà formés, et les particules fines encore en suspension dans cette eau se tient à ces flocons pour accroître le volume de ces derniers, de sorte que le liquide arrive clarifié au-dessus de ce lit de boue, et qu'une couche de liquide clarifiée se forme au-dessus du lit de boue.

Chacun de ces injecteurs est pourvu de moyens de guidage.

Ce procédé connu est décrit dans le document de brevet FR-A-2 477 896 (Ghezail et autres). Il présente les caractéristiques particulières suivantes:

Les injecteurs sont des orifices d'injection percés dans le plancher de la chambre de clarification, et lesdits moyens de guidage sont des éléments en forme d'entonnoir s'élargissant vers le haut à partir de ces orifices. Dans chaque plan horizontal coupant un tel entonnoir, la section de passage de l'eau chargée injectée serait, selon ce brevet (page 5, lignes 1 - 5) constituée par la totalité de la zone intérieure à l'entonnoir ce qui entraînerait une diminution très rapide de la vitesse de cette eau après la sortie des orifices d'injection. Ce résultat est recherché car dans ce procédé, on souhaite essentiellement l'absence d'agitation dans le lit de boue au-dessus des orifices d'injection. En fait, dès que la vitesse à travers l'orifice d'injection est sensible, il se forme un jet cylindrique axial à distance des parois de l'entonnoir. Par ailleurs dans ce procédé, une sortie temporaire partielle de la boue se fait de manière périodique à travers les orifices d'injection, par une aspiration temporaire entraînant une inversion brusque du sens de circulation à travers les orifices d'injection. Les parois des entonnoirs apparaissent alors constituer des moyens de guidage de la boue vers ces orifices. Ce sont ces inversions périodiques brèves du sens de circulation de l'eau chargée qui empêchent dans une certaine mesure la formation d'une couche continue insuffisamment perméable et l'apparition des phénomènes d'instabilité précédemment mentionnes.

Un deuxième procédé connu permet d'éviter dans une certaine mesure la formation d'une couche continue de boue insuffisamment perméable. Il est décrit dans le document de brevet FR-A-1 115 038 (Degremont) et utilise des accélérations temporaires périodiques du courant d'eau chargée à travers les orifices d'injection.

Un troisième procédé est connu par le document de brevet FR-A-2 431 317 (Dorr Oliver) correspondant au brevet américain n° 4 263 137 (Kos). Il utilise des injecteurs mobiles comportant des moyens de guidage en forme d'entonnoirs qui assurent un ralentissement du courant d'eau chargé injecté et sa répartition.

Un quatrième procédé connu est décrit dans le document de brevet DE-A-2 238 959 (H. Scheven).

Selon ce procédé le mélange de liquide chargé et d'agent de floculation est introduit dans une chambre de clarification à travers une pluralité d'injecteurs répartis sur la surface de cette chambre et chacun de ces injecteurs forme un jet vertical dirigé vers le bas en direction d'un déflecteur en forme de coupelle. Ce dernier divise ce jet, le répartit radialement et le renvoie vers le haut, c'est-à-dire vers un lit de boue. Il est précisé que l'association de ces injecteurs et de ces coupelles crée "un courant uniformément lent vers le haut". Ce procédé ne semble pas avoir été développé industriellement.

La présente invention a notamment pour but, lors de la mise en oeuvre d'un procédé de clarification du genre précédemment mentionné, de permettre de manière simple de donner au liquide qui remonte à travers ledit lit de boue une vitesse ascensionnelle moyenne augmentée et/ou de traiter un liquide chargé contenant une concentration accrue en matières solides, tout en conservant une bonne efficacité de séparation avec un même type de particules solides, et avec un même type et une même quantité de l'adjuvant de floculation relativement à la masse de matière solide.

Toute augmentation de cette vitesse ascensionnelle moyenne se traduit par un débit accru du liquide chargé traité dans une installation de surface donnée, ou, à débit à traiter donné, par une diminution de la surface nécessaire de l'installation. Lorsque le débit d'eau à traiter est important, cette diminution de la surface de l'installation constitue un avantage économique important.

La présente invention a pour objet un dispositif de clarification à lit de boue pour liquide chargé de particules solides, ce dispositif étant plus précisément destiné à recevoir un liquide chargé de particules fines en suspension et à fournir d'une part un liquide clarifié et d'autre part une boue, ce dispositif comportant:
- une chambre de clarification (4),
- une chambre de distribution (5) s'étendant sous cette chambre de clarification,
- des moyens (8, 9, 11) pour ajouter un adjuvant de floculation audit liquide chargé de manière à réaliser un mélange au sein duquel lesdites particules fines qui se rencontrent se lient avec l'aide de cet adjuvant en formant des flocons,
- des moyens (2) pour introduire ledit mélange dans cette chambre de distribution en y créant une pression sensiblement uniforme,
- une pluralité d'injecteurs (22) présentant chacun un axe (22a), pourvus chacun de moyens de guidage, et répartis sur la surface de la chambre de clarification au fond de celle-ci, chacun de ces injecteurs faisant communiquer la chambre de distribution avec la chambre de clarification pour introduire en continu ledit mélange au bas de cette dernière chambre avec un débit réparti sur la surface de cette chambre,
- un orifice d'évacuation continue de liquide clarifié (4b) en partie supérieure de la chambre de clarification (4),
- et un orifice d'évacuation continue de boue (26) plus bas que ledit orifice d'évacuation de liquide clarifié,
- le débit desdits injecteurs étant choisi de manière à former au-dessus de ces injecteurs un lit de boue (4a) au sein duquel un liquide mélangé chargé monte entre des flocons déjà formés, de sorte que les particules fines encore en suspension dans ce liquide se lient à ces flocons pour accroître le volume de ces derniers, et que le liquide arrive clarifie au-dessus de ce lit de boue en formant une couche de liquide clarifié (4a),
- ce dispositif étant caractérisé par le fait que chacun desdits injecteurs présente un axe (22a) sensiblement vertical et comporte une chambre de cyclone (22) avec une paroi latérale (22d) ayant la forme générale d'un cylindre à génératrice parallèle à cet axe et tournant autou de cet axe, et avec un fond et un plafond sensiblement perpendiculaires à cet axe, cette chambre comportant une entrée (21 a) alimentée par ladite chambre de distribution (5) et dirigée de manière à introdire ledit mélange tangentiellement dans cette chambre, cette chambre comportant aussi une sortie (21) constituée par un trou d'injection percé coaxialement dans son plafond, de manière que ledit mélange tourne dans ladite chambre selon un écoulement tourbillonnaire autout dudit axe tout en se rapprochant progressivement de l'axe et de la sortie, cette sortie constituant en même temps une entrée dans le fond de ladite chambre de clarification, de manière que ledit mélange liquide pénètre dans cette chambre de clarification en constituant un jet divergent presentant sensiblement la forme d'une nappe conique rotative autour dudit axe de l'injecteur, et de manière à obtenir ainsi à la fois une perte de charge propre à assurer une répartition du débit liquide entre les divers injecteurs, une répartition du débit de chaque injecteur sur une surface centrée sur ladite sortie d'injection et présentant une aire très supérieure à celle de cette sortie, et une agitation ménagée des couches inférieures dudit lit de boue (4a), sans créer de cisaillements excessifs propres à détruire les flocons déjà formés.

(Les signes entre parenthèses renvoient aux dessins à simple titre d'exemple).

Il est de plus apparu avantageux d'adopter, au moins dans certains cas, les dispositions plus particulières suivantes:

- ledit trou d'injection (21) de chaque dit injecteur (22) présente un diamètre inférieur à la moitié environ du diamètre moyen de ladite chambre de cyclone, de manière à former dans cette chambre un écoulement du type vortex avec une vitesse circonférentielle croissante quand on se rapproche dudit axe (22a) à partir de la paroi latérale (22d) de cette chambre, et à donner ainsi audit jet divergent, une vitesse circonférentielle horizontale au moins égale à sa vitesse axiale,

- la pression dans ladite chambre de distribution est choisie telle que chaque dite chambre de cyclone (22) alimentant un trou d'injection (21) correspondant distribue le liquie transversalement sur une surface de 50 à 100 fois supérieure à la surface du trou, grâce au fait que l'angle desdits jets divergents après la sortie (21) de l'injecteur (22) à partir de l'axe (22a) de l'injecteur est en moyenne supérieur à 45° et de préférence à 60°,

- lesdites entrées (21a) des chambres de cyclones (22) sont orientées pour créer des mouvements tourbillonnaires tournant en sens contraires de façon alternée dans les chambres de cyclones voisines de manière à éviter que lesdits jets divergents ne créent une rotation d'ensemble du liquide dans ladite chambre de clarification (4),

- le dispositif comporte des ailettes anti-vortex (15) pénétrant radialement dans ladite chambre de clarification (4) pour empêcher une rotation d'ensemble dans cette chambre,

- le plafond (22c) de chaque dite chambre de cyclone est constituée par une partie d'une tôle constituant le plancher de ladite chambre de clarification (4).

A l'aide des figures schématiques ci-jointes on va décrire plus particulièrement ci-après, à titre non limitatif, comment l'invention peut être mise en oeuvre. Lorsqu'un même élément est représenté sur plusieurs figures il y est désigné par le même signe de référence.

La figure 1 représente une vue d'un dispositif de mise en oeuvre de l'invention en coupe par un plan I - I de la figure 2, ce plan passant par l'axe vertical de ce dispositif.

La figure 2 représente une vue de ce dispositif en coupe par un plan horizontal II - II de la figure 1, à une échelle agrandie.

La figure 3 représente un détail de la figure 1 à la même échelle agrandie.

La figure 4 représente une vue très schématique des tourbillons créés dans le lit de boue par un injecteur.

Le dispositif donné en exemple et qui va être décrit ci-après est par ailleurs décrit dans la demande de brevet européen EP-A-0 179 674 (85 401 569 0) du même déposant avec les mêmes dates de priorité et de dépôt.

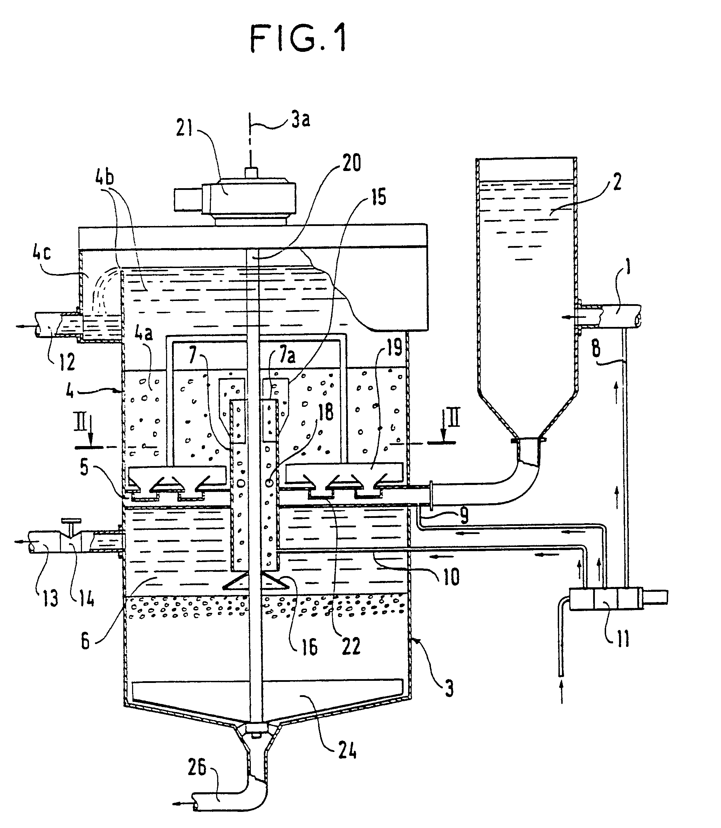

Conformément à la figure 1, le liquide chargé qui contient des matières solides en suspension (par exemple des argiles issus du lavage de phosphate) constitué par de l'eau et il est introduit par une canalisation 1 dans une cuve de floculation primaire 2 pour alimenter un appareil clarificateur décanteur 3.

Cet appareil clarificateur et décanteur présente un axe vertical 3a et il est principalement composé de deux étages de forme généralement cylindrique et superposés un étage primaire supérieur 4 constitue ladite chambre de clarification. Il déverse par débordement sur un seuil circulaire 4b constituant ledit orifice d'évacuation d'eau. Il est limité à sa partie basse par une chambre 5 qui constitue ladite chambre de distribution et sépare l'étage supérieur 4 de l'étage secondaire inférieur 6.

Le fond de l'étage primaire supérieur 4 est représenté de forme horizontale. Il peut être également de forme conique à pointe en bas sans altérer le fonctionnement de l'appareil.

La chambre 5 placée entre les deux étages 4 et 6 sert à l'alimentation du lit de boue 4a qui se forme dans la partie basse de l'étage supérieur et dans lequel a lieu une floculation secondaire grâce à laquelle se forment les agglomérats ou flocons qui seront décantés et concentrés dans l'étage inférieur 6.

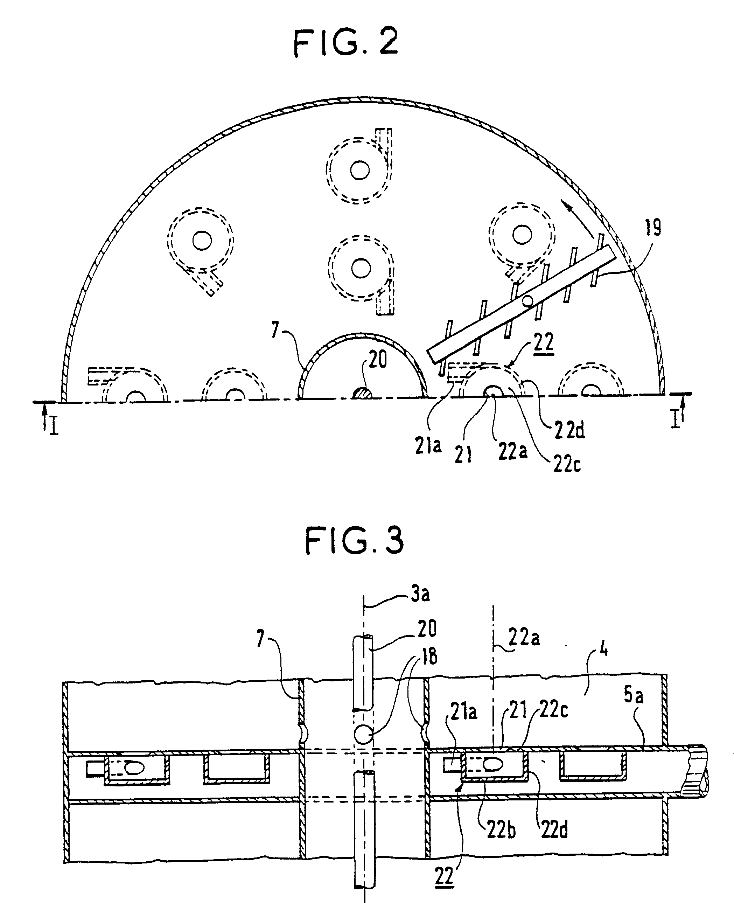

Les injecteurs qui équipent cette chambre 5 seront décrits de façon plus précise ci-après à l'aide des figures 2 et 3.

L'étage primaire supérieur 4 et l'étage secondaire inférieur 6 sont reliés hydrauliquement par un puits central 7 qui s'ouvrent en 7a dans l'épaisseur du lit de boue et qui permet de faire passer les flocons constitués dans ce lit de boue de l'étage primaire dans l'étage secondaire inférieur ou ils vont se décanter et se concentrer.

Il est possible d'utiliser pour la formation des agglomérats les divers adjuvants de floculation que l'on trouve dans le commerce y compris les différents polymères à condition toutefois que le floculant utilisé soit le mieux adapté aux matières solides à décanter et aux caractéristiques du liquide à clarifier.

L'adjuvant utilisé pour la floculation est dilué à la bonne concentration pour obtenir son effet maximum et il est injecté généralement en deux ou trois point de l'appareil.

Comme le montre la figure 1 une première dose d'adjuvant est introduite en 8 avant l'introduction de l'eau à clarifier dans la cuve 2 afin de déclencher la floculation primaire dans cette cuve avec la formation de petits flocons de faibles dimensions inférieurs à 1 à 2 mm.

Après cette floculation une deuxième dose d'adjuvant est introduite en 9 à l'entrée de la chambre de distribution 5 qui sert en même temps de chambre de mélange.

La floculation secondaire s'effectue dans le lit de boue 4a de l'étage primaire supérieur 4. Généralement les deux premières floculations sont suffisantes, mais pour certains types de particules on peut adjoindre une troisième dose du même adjuvant en un point 10 au bas du puits 7 avant l'entrée dans l'étage inférieur 6. Quelquefois l'adjuvant introduit en 10 peut être de nature différente car il peut être un adjuvant qui accélère la concentration des flocons dans l'étage 6. Les différentes quantités d'adjuvants introduits sont dosées par une pompe doseuse multitêtes 11 ou par deux pompes du même type si les adjuvants sont différents.

Les deux étages de l'appareil fournissent du liquide clarifié: l'étage supérieur par débordement et évacuation par un canal circulaire 4c et une tubulure 12, l'étage inférieur 6 par une tubulure 13. Cette tubulure est munie d'une vanne ou d'un autre dispositif de réglage hydraulique 14 afin de régler la proportion de liquide clarifié sortant de l'étage primaire par la tubulure 12 et de l'étage secondaire par la tubulure 13.

Généralement le débit de liquide clarifié produit par l'étage primaire est pratiquement égal à celui produit par l'étage secondaire. Cette proportion pourra être modifiée si l'on veut améliorer la qualité de la clarification du liquide et augmenter le rapport du débit secondaire au débit primaire, qui pourra aller jusqu'à deux.

Afin d'améliorer la stabilité du lit de boue 4a dans l'étage primaire 4 le puits central 7 est équipé d'un certain nombre d'ailettes anti-vortex 15.

Par ailleurs pour améliorer la distribution du liquide chargé passant par le puits 7 et qui alimente l'étage inférieur 6 ce puits 7 est équipé dans sa partie basse par un déflecteur de forme conique 16.

Le puits 7 est non seulement ouvert à son sommet 7a dans l'épaisseur du lit de boue 4a, mais aussi perforé de un ou plusieurs trous 18 placés près du fond de l'étage supérieur 4 afin de faire communiquer directement le bas du lit de boue avec le puits. Cette disposition permet de faire passer une faible partie du débit de liquide chargé contenu dans le lit de boue 4a vers le puits 7, la majeure partie débordant au sommet du puits 7 pour s'écouler vers l'étage 6. Cette disposition offre l'avantage de faire passer directement dans le puits 7 des agglomérats qui auraient trop grossi et qui ne pourraient remonter jusqu'au sommet du puits 7.

Pour faciliter l'évacuation de gros agglomérats par les trous 18 des pales de raclage 19 repoussent grâce à leur mouvement de rotation lente par effet mécanique centripete ces gros agglomérats vers les trous du puits pour les évacuer. Ces pales sont commandées par un arbre de commande 20 actionné par un moto-réducteur 21. Ce même arbre 20 commande également par le même mouvement des pales de raclage 24 qui permettent l'évacuation des boues concentrées dans le fond de l'étage secondaire 6 afin de les évacuer hydrauliquement par une tubulure 26.

La figure 3 montre une vue en coupe agrandie de la chambre de distribution 5 et des injecteurs et la figure 2 montre une vue en plan partielle de ces mêmes injecteurs.

Comme il a été dit précédemment, la formation des agglomérats, l'homogénéité de leur granulométrie et de leur densité sont des paramètres essentiels du bon fonctionnement de l'appareil de clarification.

Pour atteindre l'objectif recherché selon l'invention, il est nécessaire d'assurer une équirépartition la plus parfaite possible du débit du liquide à clarifier sur l'ensemble de la surface transversale de l'appareil donc une uniformité des vitesses de l'écoulement ascendant dans le lit de boue 4a contenue dans la chambre 4.

Pour cela comme cela est montré sur la figure 3 l'étage primaire de clarification 4 est limité à son fond par la chambre 5 qui porte dans sa partie supérieure une séparation 5a qui forme le plancher de la chambre de clarification 4 et qui est percée de trous d'injection répartis sur sa surface. Ces trous 21 permettent d'introduire dans cette chambre le liquide à clarifier ayant déjà reçu les deux doses d'adjuvants de floculation primaire et secondaire.

Chaque trou 21 cnstitue la sortie d'une chambre de cyclone plate 22 qui créé un mouvement tourbillonnaire de façon à faire éclater le liquide à clarifier à la sortie de chaque trou 21 sur une surface de 40 à 100 fois supérieure à la surface de chaque trou.

Comme le montre la figure 2 chaque chambre de cyclone plate 22 a une entrée tangentielle 21a de façon à amorcer dans cette chambre un mouvement tourbillonnaire qui se poursuit par continuité dans les trous 21 et dans le bas du lit de boue 4a amenant ainsi une distribution homogène du liquide à clarifier et un mélange des adjuvants de floculation avec ce même liquide.

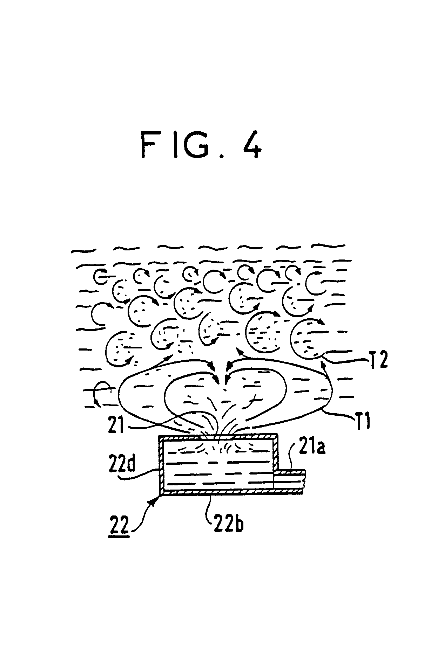

Ces cyclones plats 22 avec leurs trous de sortie 21 et leurs entrées 21a constituent chacun un dit injecteur, qui présente un axe vertical 22a et crée un tourbillon primaire du genre précédemment mentionné. Ce tourbillon est représenté en T1 sur la figure 4. Il atteint le bord de la zone d'expansion 22b de l'injecteur. Il revient ensuite vers l'axe de cet injecteur et un courant descendant apparaît sur cet axe. Il entretient des tourbillons secondaires tels que T2 au-dessus de lui qui entretiennent eux mêmes d'autres tourbillons. Il en résulte dans le lit de boue une agitation tourbillonnaire sensible en partie basse. Cette agitation décroît vers le haut, et la couche supérieure du lit de boue n'est pratiquement pas agitée.

Par ailleurs comme le montre la figure 2 les entrées tangentielles des cyclones sont placées de façon alternée avec un sens tournant du mouvement tourbillonnaire de gauche à droite ou de droite à gauche de façon à annuler les mouvements partiels de fond et éviter un mouvement tourbillonnaire de masse dans la chambre 4.

Pour montrer l'intérêt de l'invention et à titre d'exemple, en comparaison avec un appareil de 1 m de diamètre à deux étages avec une alimentation du lit de boue par le système classique à fente qui clarifiait de 16 à 18 $m^3$/h d'eaux argileuses chargées à une concentration de 30 à 40 g/litre de matières solides, un appareil du type décrit dans l'invention ci-avant de mêmes dimensions a pu clarifier un débit de 70 à 80 $m^3$/h avec la même consommation de floculant à la tonne de matières sèches décantées soit 90 à 100 grammes de floculant à la tonne.

L'appareil expérimenté était équipé à l'alimentation du lit de boue d'une cinquantaine d'injecteurs cyclones équipés de trous de sortie dans le lit de boue de diamètre 20 mm.

## Revendications

1. Dispositif de clarification à lit de boue pour liquide chargé de particules solides, ce dispositif étant plus précisément destiné à recevoir un liquide chargé de particules fines en suspension et à fournir d'une part un liquide clarifié et d'autre part une boue, ce dispositif comportant:
   - une chambre de clarification (4),
   - une chambre de distribution (5) s'étendant sous cette chambre de clarification,
   - des moyens (8, 9, 11) pour ajouter un adjuvant de floculation audit liquide chargé de manière à réaliser un mélange au sein duquel lesdites particules fines qui se rencontrent se lient avec l'aide de cet adjuvant en formant des flocons,
   - des moyens (2) pour introduire ledit mélange dans cette chambre de distribution en y créant une pression sensiblement uniforme,
   - une pluralité d'injecteurs présentant chacun un axe (22a), pourvus chacun de moyens de guidage, et répartis sur la surface de la chambre de clarification au fond de celle-ci, chacun de ces injecteurs faisant communiquer la chambre de clarification avec la chambre de distribution pour introduire en continu ledit mélange au bas de cette dernière chambre avec un débit réparti sur la surface de cette chambre,
   - un orifice d'évacuation continue de liquide clarifié (4b) en partie supérieure de la chambre de clarification (4),
   - et un orifice d'évacuation continue de boue (26) plus bas que ledit orifice d'évacuation de liquide clarifié,
   - le débit desdits injecteurs étant choisi de manière à former au-dessus de ces injecteurs un lit de boue (4a) au sein duquel un liquide mélangé chargé monte entre des flocons déjà formés, de sorte que les particules fines encore en suspension dans ce liquide se lient à ces flocons pour accroître le volume de ces derniers, et que le liquide clarifié arrive au-dessus de ce lit de boue en formant une couche de liquide clarifié (4a),
   - ce dispositif étant caractérisé par le fait que chacun desdits injecteurs présente un axe (22a) sensiblement vertical et comporte une chambre de cyclone (22) avec une paroi latérale (22d) tournant autour de cet axe, et avec un fond et un plafond sensiblement perpendiculaires à cet axe, cette chambre comportant une entrée (21a) alimentée par ladite chambre de distribution (5) et dirigée de manière à introduire ledit mélange tangentiellement dans cette chambre, cette chambre comportant aussi une sortie (21) constituée par un trou d'injection percé coaxialement dans son plafond, de manière que ledit mélange tourne dans ladite chambre selon un écoulement tourbillonnaire autour dudit axe tout en se rapprochant progressivement de l'axe et de la sortie, cette sortie constituant en même temps une entrée dans le fond de ladite chambre de clarification, de manière que ledit mélange liquide pénètre dans cette chambre de clarification en constituant un jet divergent présentant sensiblement la forme d'une nappe conique rotative autour dudit axe de l'injecteur, et de manière à obtenir à la fois une perte de charge propre à assurer une répartition du débit liquide entre les divers injecteurs, une répartition du débit de chaque injecteur sur une surface centrée sur ladite sortie d'injection et présentant une aire très supérieure à celle de cette sortie, et une agitation ménagée des couches inférieures dudit lit de boue (4a), sans créer de cisaillements excessifs propres à détruire les flocons déjà formés.

2. Dispositif selon la revendication 1, caractérisé par le fait que ledit trou d'injection (21) de chaque dit injecteur présente un diamètre inférieur à la moitié environ du diamètre moyen de ladite chambre de cyclone, de manière à former dans cette chambre un écoulement du type vortex avec une vitesse circonférentielle croissante quand on se rapproche dudit axe (22a) à partir de la paroi latérale (22d) de cette chambre, et à donner ainsi audit jet divergent, à partir de cette paroi latérale (22d) de cette chambre, une vitesse circonférentielle horizontale au moins égale à sa vitesse axiale.

3. Procédé de clarification de liquide utilisant le dispositif selon la revendication 1, caractérisé par

le fait que la pression dans ladite chambre de distribution est choisie telle que chaque dite chambre de cyclone (22) alimentant un trou d'injection (21) correspondant distribue le liquide transversalement sur une surface de 50 à 100 fois supérieure à la surface du trou, grâce au fait que l'angle desdits jets divergents après la sortie (21) de l'injecteur à partir de l'axe (22a) de l'injecteur est en moyenne supérieur à 45° et de préférence à 60°.

4. Procédé de clarification de liquide utilisant le dispositif selon la revendication 1, caractérisé par le fait que lesdites entrées (21a) des chambres de cyclones (22) sont orientées pour créer des mouvements tourbillonnaires tournant en sens contraires de façon alternée dans les chambres de cyclones voisines de manière à éviter que lesdits jets divergents ne créent une rotation d'ensemble du liquide dans ladite chambre de clarification (4).

5. Dispositif selon la revendication 1, caractérisé par le fait qu'il comporte des ailettes anti-vortex (15) pénétrant radialement dans ladite chambre de clarification (4) pour empêcher une rotation d'ensemble dans cette chambre.

6. Dispositif selon la revendication 1, caractérisé par le fait que le plafond (22c) de chaque dite chambre de cyclone est constitué par une partie d'une tôle constituant le plancher de ladite chambre de clarification (4).


**Patentansprüche**

1. Anlage mit einem Schlammbett zum Klären einer mit festen Partikeln beladenen Flüssigkeit, insbesondere zur Aufnahme einer Flüssigkeit mit feinen darin suspendierten Teilchen und zur Abgabe einerseits einer klaren Flüssigkeit, andererseits eines Schlammes, wobei die Anlage umfaßt:
   - eine Klärkammer (4),
   - eine Verteilerkammer (5), die sich unter der Klärkammer erstreckt,
   - Mittel (8, 9, 11) zur Beigabe eines Flockenbildnerzusatzes zur beladenen Flüssigkeit, so daß sich ein Gemisch ergibt, in welchem die sich begegnenden feinen Teilchen sich aneinander mit Hilfe des Flockenbildnerzusatzes unter der Bildung von Flocken binden,
   - Mittel (2) zur Einleitung des Gemisches in die Verteilerkammer unter Herstellung eines im wesentlichen gleichmäßigen Druckes darin,
   - eine Vielzahl von über die Oberfläche der Klärkammer am Boden derselben verteilten Injektoren mit einer Achse (22a) und mit Führungsmitteln, wobei jeder der Injektoren die Verteilerkammer mit der Klärkammer zur kontinuierlichen Einleitung des Gemisches in den unteren Teil dieser Kammer verbindet und die Durchsatzmenge über die Oberfläche der Kammer verteilt ist,
   - eine Öffnung zur kontinuierlichen Entnahme geklärter Flüssigkeit aus dem oberen Teil der Klärkammer (4),
   - und eine Öffnung zur kontinuierlichen Entnahme von Schlamm (26) an einer tiefer liegenden Stelle als die Öffnung zur Entnahme geklärter Flüssigkeit,
   - wobei der Durchsatz der genannten Injektoren so gewählt ist, daß über den Injektoren ein Schlammbett (4a) gebildet wird,
   in welchem eine beladene vermischte Flüssigkeit zwischen den bereits gebildeten Flocken aufsteigt, derart, daß sich die noch in der Flüssigkeit suspendierten feinen Partikel an diese Flocken binden und deren Volumen vergößern und daß die Flüssigkeit über dem Schlammbett unter Bildung einer Schicht geklärter Flüssigkeit (4a) geklärt ankommt,
   dadurch gekennzeichnet, daß jeder der Injektoren eine im wesentlichen senkrechte Achse (22a) aufweist und eine Zyklonkammer (22) mit einer um diese Achse laufenden Seitenwand (22d) besitzt sowie einen Boden und eine Decke, die zu dieser Achse im wesentlichen senkrecht verlaufen, wobei diese Kammer einen Einlaß (21a) umfaßt, der von der Verteilerkammer (5) gespeist wird und so ausgerichtet ist, daß er das Gemisch tangential in die Kammer einleitet, wobei die Kammer weiter einen Auslaß (21) umfaßt, der durch ein koaxial in ihre Decke gebohrtes Injektionsloch gebildet wird, derart, daß sich das Gemisch in der Kammer gemäß einer Wirbelströmung um die Achse dreht und sich zunehmend der Achse und dem Auslaß nähert, wobei dieser Auslaß zugleich einen Einlaß im Boden der Klärkammer bildet, derart, daß das Flüssigkeitsgemisch unter Bildung eines divergierenden Strahls in Gestalt einer um die Achse des Injektors rotierenden konischen Schicht in die Klärkammer eindringt, und derart, daß auf diese Weise zugleich ein Druckabfall, der zur Sicherung einer Verteilung der Flüssigkeitsdurchsatzmenge über die verschiedenen Injektoren geeignet ist, eine Verteilung des Durchsatzes jedes Injektors über eine auf den Injektionsauslaß zentrierte Oberfläche von einer Ausdehnung, die wesentlich größer als die des genannten Auslasses ist, und eine gezielte Bewegung der unteren Schichten des Schlammbettes (4a) erreicht wird, ohne daß übermäßige Scherungen auftreten, welche die bereits gebildeten Flocken zu zerstören vermögen.

2. Anlage nach Anspruch 1, dadurch gekennzeichnet, daß das Injektionsloch (21) jedes Injektors einen Durchmesser besitzt, der kleiner als ungefähr die Hälfte des mittleren Durchmessers der Zyklonkammer ist, derart, daß in dieser Kammer eine Vortexströmung gebildet wird, deren Umfangsgeschwindigkeit mit Annäherung an die genannte Achse (22a) von der Seitenwand (22d) dieser Kammer her zunimmt, und daß auf diese Weise dem divergierenden Strahl eine Umfangsgeschwindigkeit in der Waagerechten verliehen wird, die mindestens gleich seiner Axialgeschwindigkeit ist.

3. Verfahren zum Klären einer Flüssigkeit unter Verwendung der Anlage nach Anspruch 1, dadurch gekennzeichnet, daß der Druck in der Verteilerkammer so gewählt ist, daß jede ein zugehöriges Injektionsloch (21) speisende Zyklonkammer (22) die Flüssigkeit transversal über eine Oberfläche verteilt, welche 50 bis 100 mal größer als die Fläche des Loches ist, und zwar deswegen, weil der Winkel der auseinanderstrebenden Düsenstrahlen hinter dem Auslaß (21) des Injektors ab Injektorachse (22a) im Mittel größer als 45°, vorzugsweise 60° ist.

4. Verfahren zum Klären einer Flüssigkeit unter Verwendung der Anlage nach Anspruch 1, dadurch gekennzeichnet, daß die Einlässe (21a) der Zyklonkammern (22) so ausgerichtet sind, daß sie Wirbelbewegungen mit abwechselnd umgekehrter Drehrichtung in den benachbarten Zyklonkammern erzeugen, so daß vermieden wird, daß die divergierenden Strahlen eine Gesamtrotation der Flüssigkeit in der Klärkammer hervorrufen.

5. Anlage nach Anspruch 1, dadurch gekennzeichnet, daß sie Antivortexrippen (15) aufweist, welche radial in die Klärkammer (4) zur Verhinderung einer Gesamtrotation in der Kammer eindringen.

6. Anlage nach Anspruch 1, dadurch gekennzeichnet, daß die Decke (22c) jeder Zyklonkammer aus einem Teil eines Bleches gebildet ist, welcher den Boden der Klärkanmmer (4) bildet.

## Claims

1. A sludge bed clarification apparatus for a liquid loaden with solid particles, the apparatus being more precisely intended to receive a liquid loaden with fine particles in suspension and to deliver a clarified liquid on the one hand and a sludge on the other hand, said apparatus comprising:
- a clarification chamber (4),
- a distribution chamber (5) loaden under the clarification chamber,
means (8, 9, 11) for adding a flocculation additive to said loaden liquid so as to create a mixture, wherein the fine particles, which meet one another, link up by means of that additive in forming flakes,
- means (2) for feeding said mixture into the distribution chamber and adapted to establish a substantially uniform pressure therein,
- a plurality of injectors (22), each having an axis (22a), each being provided with guide means, and being distributed over the bottom area of the clarification chamber, each of these injectors putting the distribution chamber in communication with the clarification chamber for continuously feeding said mixture to the bottom of that latter chamber, with the discharge distributed over the surface of that chamber,
- an outlet orifice (4b) for continuously removing clarified liquid (4b) from the upper part of the clarification chamber (4), and
- an outlet orifice (26) for continuously removing sludge, located below the outlet orifice for the removal of clarified liquid,
- the throughput of said injectors being chosen such as to form above these injectors a sludge bed (4a), wherein a loaden mixed liquid rises in between the flakes already formed, such that the fine particles still in suspension in the liquid link up with these flakes and increase the volume thereof, and that the liquid which arrives at the upper side of the sludge bed is clarified and forms a layer of clarified liquid (4a),
- said apparatus being characterized in that each of said injectors has a substantially vertical axis (22a) and comprises a cyclone chamber (22) with the side wall (22d) having the general shape of a cylinder constituted by a generatrix line parallel to and rotated about said axis and with a bottom and a ceiling substantially perpendicular to this axis, said chamber including an inlet (21a) fed from the said distribution chamber (5) and directed in such a manner as to inject said mixture into said chamber tangentially, said chamber also including an outlet (21) constituted by an injection hole pierced coaxially through its ceiling, as to cause the mixture to rotate in the chamber by way of a vortex flow about said axis while progressively approaching the axis and the outlet, said outlet constituting simultaneously an input in the bottom of said clarification chamber, such, that said liquid mixture penetrates into the clarification chamber as a diverging jet having substantially the shape of a conical sheet rotating about said injector axis, and in such a manner as to realize simultaneously a proper head loss adapted to ensure a distribution of the liquid flow between the various injectors, a distribution of the discharge of each injector over an area centred on said injector outlet and presenting a surface very much greater than that of the outlet, and an arranged agitation of the lower layers of said sludge bed (4a), without creating excessive shear able to destroy the flakes already formed.

2. An apparatus according to claim 1, characterized in that the injector hole (21) of each injector (22) has a diameter which is less than about half of the average diameter of said cyclone chamber, so as to form in that chamber a vortex-type flow having an increasing circumferential speed when approaching said axis (22a) from the wall (22d) of that chamber, and to impart to said divergent jet a horizontal circumferential speed, which is at least equal to its axial speed.

3. A method for clarifying a liquid by application of the apparatus according to claim 1, characterized in that the pressure in said distribution chamber is chosen such, that each cyclone chamber (22) feeding a corresponding injector hole (21) distributes the liquid transversely over an area which is 50 to 100 times greater than the surface of the hole, because of the angle of said divergent jets downstream the outlet (21) of the injector (22) being on average greater than 45°, and preferably 60°, as measured from the injector axis (22a).

4. A method for clarifying a liquid by application of the apparatus according to claim 1, characterized in that said inlets (21a) of the cyclone chambers (22) are oriented to create vortex movements rotating alternatively in opposite directions in adjacent cyclone chambers so as to prevent said divergent jets from creating an overall rotation of the liquid in said clarification chamber (4).

5. An apparatus according to claim 1, characterized in that it comprises anti-vortex fins (15), which penetrate radially into said clarification chamber (4) in order to prevent an overall rotation within that chamber.

6. An apparatus according to claim 1, characterized in that the ceiling (22c) of each one of said cyclone chambers is constituted by a portion of a metal sheet which constitutes the bottom of said clarification chamber (4).

# FIG.1

1

# FIG. 2

# FIG. 3

# FIG. 4